# EUROPÄISCHE PATENTSCHRIFT

(11) **EP 3 973 206 B1**
(45) Veröffentlichungstag und Bekanntmachung des Hinweises auf die Patenterteilung: **28.02.2024**
(21) Anmeldenummer: 20730197.9
(22) Anmeldetag: 15.05.2020
(51) Int. Cl.: F16D 65/12, B23K 26/34, C22C 38/40

(54) **VERFAHREN ZUR HERSTELLUNG EINES REIBBREMSKÖRPERS FÜR EINE REIBBREMSE**
METHOD FOR PRODUCING A FRICTION BRAKE BODY FOR A FRICTION BRAKE
PROCÉDÉ DE FABRICATION D'UN CORPS DE FREIN À FRICTION POUR UN FREIN À FRICTION

(30) Priorität: 18.05.2019 DE 102019207291
(43) Veröffentlichungstag der Anmeldung: 30.03.2022
(73) Patentinhaber: Robert Bosch GmbH, 70442 Stuttgart (DE)
(72) Erfinder: POTAPENKO, Ilja, 35236 Biedenkopf (DE); SCHNATTERER, Christian, 61440 Oberursel (DE); PFEIFFER, Thomas, 35239 Steffenberg (DE); WU, Kangjian, 35041 Marburg (DE); LOSKYLL, Simon, 71254 Ditzingen (DE)
(86) Internationale Anmeldenummer: PCT/EP2020/063595
(87) Internationale Veröffentlichungsnummer: WO 2020/234147

(56) Entgegenhaltungen:
- DE-A1-102010 048 075
- US-A1- 2002 179 204
- US-A1- 2017 253 945
- US-A1- 2020 072 307

## Beschreibung

Die Erfindung betrifft ein Verfahren zum Herstellen eines Reibbremskörpers.

### Stand der Technik

Reibbremsen für Kraftfahrzeuge weisen üblicherweise als Reibbremskörper eine Bremsscheibe und zumindest einen Bremsklotz auf, die durch Gegeneinanderpressen eine Reibkraft erzeugen, die drehzahlreduzierend wirkt. Dabei ist die Bremsscheibe üblicherweise drehfest mit einem Rad des Kraftfahrzeugs verbunden und der Bremsklotz karosseriefest derart verlagerbar, dass er in Anlagekontakt mit der Bremsscheibe bringbar ist. Durch die Reibung, die aufgrund der Relativbewegung der Bremsscheibe zu dem Bremsklotz entsteht, erfolgt ein Abrieb an der Bremsscheibe, der zu einem Verschleiß der Bremsscheibe sowie zu Bremsstaub, der in die Umgebung gelangt, führt.

Es ist daher bekannt, eine Verschleißschutzschicht vorzusehen, welche insbesondere die dem Bremsklotz zugewandte Reibkontaktoberfläche bildet und einen im Vergleich zum Basiskörper reduzierten Abrieb gewährleistet.

Die Offenlegungsschrift US 2017/0253945 A1 offenbart einen als Bremsscheibe ausgebildeten Reibbremskörper, der aus einem martensitischen Stahlwerkstoff mit ferritischen und austenitischen Teilbereichen gebildet ist.

### Offenbarung der Erfindung

Ein nach dem erfindungsgemäßen Verfahren mit den Merkmalen des Anspruchs 1 hergestellter Reibbremskörper hat den Vorteil, dass durch eine vorteilhafte Verschleißschutzschicht ein besonders niedriger Abrieb gewährleistet ist. Wobei die Verschleißschutzschicht abgesehen von einer hohen Verschleißbeständigkeit auch eine hohe Korrosionsbeständigkeit sowie eine hohe Beständigkeit gegenüber Rissbildung bietet. Erfindungsgemäß ist hierzu vorgesehen, dass die Verschleißschutzschicht aus ferritisch-austenitischem Stahl gefertigt ist und Hartstoffpartikel aufweist. Die Verschleißschutzschicht des erfindungsgemäßen Reibbremskörpers weist also einen ferritisch-austenitischen Stahl, der sich insbesondere durch ein zweiphasiges Gefüge bestehend aus einer Ferrit-Matrix mit eingelagerten Austenit-Inseln auszeichnet, sowie Hartstoffpartikel auf, die in dem ferritisch-austenitischen Stahl verteilt sind. Der ferritisch-austenitische Stahl zeichnet sich neben seiner Korrosionsbeständigkeit besonders durch seine hervorragende Rissbeständigkeit aus. An den Phasengrenzen, insbesondere bei Übergang von Ferrit auf den duktileren Austenit, kommen Risse, wie sie bei der Abkühlung oder bei den thermomechanischen Beanspruchungen während Bremsungen entstehen, aus bruchmechanischen Gründen zum Stillstand. Durch die Zugabe der Hartstoffpartikel wird die Verschleißbeständigkeit erhöht, sodass sich insgesamt die oben genannten Vorteile ergeben. Insbesondere sind die Hartstoffpartikel fein verteilt in der Verschleißschutzschicht angeordnet, um eine homogene Ausbildung der Verschleißschutzschicht zu gewährleisten.

Gemäß einer bevorzugten Weiterbildung der Erfindung weist die Verschleißschutzschicht Chrom und/oder Stickstoff zur Erhöhung der Korrosionsbeständigkeit auf.

Weiterhin ist bevorzugt vorgesehen, dass die Hartstoffpartikel eine mittlere Partikelgröße von weniger als 50 µm aufweisen. Dadurch ergibt sich eine vorteilhafte Partikelgröße zur Verteilung in der Matrixphase, wobei größere Partikelgrößen, die zu einem schnelleren Verschleiß der Bremsbeläge an dem Bremsklotz führen, vermieden werden. Je nach Ausführungsform oder Anwendung des Reibbremskörpers können jedoch auch größere Partikelgrößen von Vorteil sein.

Besonders bevorzugt sind als Hartstoffpartikel Karbide, Oxide, Nitride oder Boride in der Verschleißschutzschicht vorhanden.

Weiterhin ist bevorzugt vorgesehen, dass der Anteil der Hartstoffpartikel kleiner oder gleich 70 Vol.-% der Verschleißschutzschicht ist. Dadurch wird eine Fehlanpassung der Wärmeausdehnungskoeffizienten zwischen Verschleißschutzschicht und Basiskörper und daraus resultierende Spannungen im Reibbremskörper während eines Bremsvorgangs vorteilhaft begrenzt, sodass keine Risse oder Überspannungen in dem Reibbremskörper entstehen. Darüber hinaus ist bevorzugt ein Anteil der Matrixphase (ferritisch-austenitischer Stahl) von mindestens 30 Vol.-% vorhanden, um eine vortheilhafte Duktilität und Zähigkeit der Schicht zu gewährleisten.

Erfindungsgemäß ist eine Zwischenschicht aus reinem ferritisch-austenitischen Stahl, also ohne eingelagerte Hartstoffpartikel, zwischen der Verschleißschutzschicht und dem Basiskörper ausgebildet. Durch die Zwischenschicht, die sich durch eine besonders hohe Korrosions- und Rissbeständigkeit auszeichnet, wird der Vorteil erreicht, dass eine Rissausbreitung in der Verschleißschutzschicht bei hoher thermomechanischer Beanspruchung durch die rissbeständige Zwischenschicht gestoppt und so eine Freilegung des korrosionsanfälligen Substrats unterbunden wird. Dadurch wird die Dauerhaltbarkeit sowie Belastbarkeit des Reibbremskörpers weiter erhöht.

Das erfindungsgemäße Verfahren mit den Merkmalen des Anspruchs 1 zeichnet sich dadurch aus, dass die Verschleißschutzschicht aus ferritisch-austenitischem Stahl mit insbesondere fein verteilten, eingelagerten Hartstoffpartikeln hergestellt wird. Es ergeben sich die bereits genannten Vorteile.

Bevorzugt wird die Verschleißschutzschicht durch Laserauftragsschweißen oder thermisches Spritzen auf den Basiskörper aufgebracht.

Weiterhin ist bevorzugt vorgesehen, dass die Verschleißschutzschicht mit Chrom und/oder Stickstoff zulegiert ist.

Außerdem werden bevorzugt Hartstoffpartikel mit einer mittleren Partikelgröße von weniger als 50 µm verwendet, um eine Überanspruchung des Kontaktpartners, also beispielsweise des Bremsklotzes, während des Bremsvorgangs zu vermeiden.

Vorzugsweise werden als Hartstoffpartikel Karbide, Oxide, Nitride oder Boride verwendet.

Erfindungsgemäß wird vor dem Aufbringen der Verschleißschutzschicht eine Zwischenschicht aus reinem ferritisch-austenitischem Stahl auf den Basiskörper aufgebracht. Hierdurch wird die Riss- und Korrosionsbeständigkeit des Reibbremskörpers insgesamt, wie vorstehend bereits erwähnt, erhöht.

Besonders bevorzugt wird der Basiskörper vor dem Aufbringen der Verschleißschutzschicht und/oder der Zwischenschicht mechanisch vorbearbeitet.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
- Figur 1: einen vorteilhaften Reibbremskörper in einer vereinfachten perspektivischen Darstellung,
- Figur 2: eine Detailschnittdarstellung des Reibbremskörpers und
- Figur 3: ein Flussdiagramm zur Erläuterung eines vorteilhaften Verfahrens zur Herstellung des Reibbremskörpers.

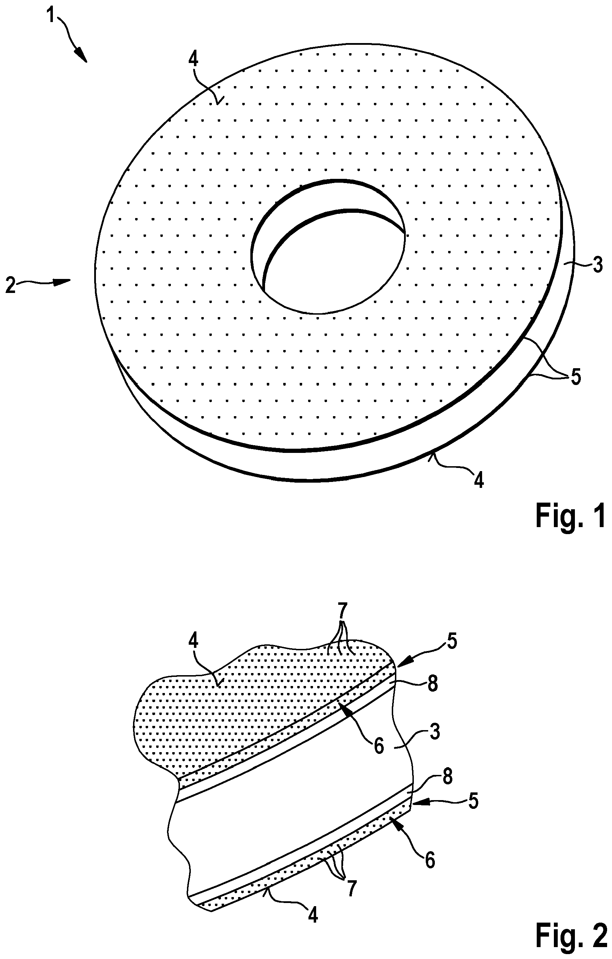

Figur 1 zeigt in einer vereinfachten Darstellung einen als Bremsscheibe 2 ausgebildeten Reibbremskörper 1 für eine hier nicht näher dargestellte Reibbremse eines Kraftfahrzeugs. Der Reibbremskörper 1 weist einen aus Grauguss gefertigten Basiskörper 3 auf, der scheibenringförmig ausgebildet ist. Ein optional vorhandener Bremsscheibentopf der Bremsscheibe 2 ist in Figur 1 nicht gezeigt.

Auf seinen beiden Stirnseiten weist der Basiskörper 3 jeweils eine ringförmige Reibkontaktoberfläche 4 auf, die durch eine Verschleißschutzschicht 5 auf dem Basiskörper 3 ausgebildet ist. Die Verschleißschutzschicht 5 bildet bei bestimmungsgemäßem Gebrauch des Reibbremskörpers 1 den Kontaktpartner zumindest eines verlagerbaren Bremsbelags oder Bremsklotz der Reibbremse, welcher gegen die Bremsscheibe zur Erzielung einer Reibbremsung gepresst werden kann. Aufgrund der Relativbewegung zwischen Bremsscheibe und Bremsklotz während eines Bremsvorgangs entsteht an der Reibkontaktoberfläche 4 Abrieb an dem Reibbremskörper 1. Dieser Abrieb führt zum einen zum Verschleiß des Reibbremskörpers 1 und zum anderen zu Bremsstaub, der in die Umgebung gelangen kann.

Zum Erhöhen der Verschleiß- und Korrosionsbeständigkeit sowie der Beständigkeit gegenüber Rissbildung ist die Verschleißschutzschicht 5 aus einem ferritisch-austenitischen Stahl 6 gefertigt und weist insbesondere fein verteilte, eingelagerte Hartstoffpartikel 7 auf, die in Figur 1 vereinfacht durch Punkte gezeigt sind.

Gemäß dem vorliegenden Ausführungsbeispiel ist die Verschleißschutzschicht 5 mehrlagig ausgebildet. Figur 2 zeigt hierzu eine Detailschnittdarstellung des Reibbremskörpers 1 im Bereich der Reibkontaktoberfläche 4. Die Verschleißschutzschicht 5 bildet eine Randschicht des Reibbremskörpers 1 aus. Gemäß dem vorliegenden Ausführungsbeispiel ist zwischen der Verschleißschutzschicht 5 mit Hartstoffpartikeln 7 außerdem eine Zwischenschicht 8 ausgebildet, die aus reinem ferritisch-austenitischen Stahl ausgebildet ist.

Ferritisch-austenitische Stähle zeichnen sich durch ihre hervorragende Rissbeständigkeit aus. Durch die Zwischenschicht 8 werden außerdem in der Verschleißschutzschicht 5 entstehende Risse gestoppt, sodass sich Risse in der Verschleißschutzschicht 5 nicht bis in den Basiskörper 3 bewegen können.

Vorzugsweise wird die Korrosionsbeständigkeit der Verschleißschutzschicht 5 durch das Zulegieren von Chrom und/oder Stickstoff erhöht. Durch die vorhandenen Hartstoffpartikel in der Verschleißschutzschicht 5 wird die Verschleißbeständigkeit beziehungsweise Abriebbeständigkeit an der Reibkontaktoberfläche 4 erhöht. Vorzugsweise weisen dazu die Hartstoffpartikel 7 eine mittlere Partikelgröße von weniger als 50 µm auf. Als Hartstoffpartikel 7 sind insbesondere Karbide, Oxide, Nitride oder Boride vorgesehen. Der Hartstoffanteil in der Verschleißschutzschicht 5 beträgt bevorzugt maximal 70 Vol.-%, damit eine Fehlanpassung der Wärmeausdehnungskoeffizienten zwischen Schicht und Basiskörper und die daraus resultierenden Spannungen im Reibbremskörper 1 bei der Durchführung einer Bremsung nicht zu hoch werden.

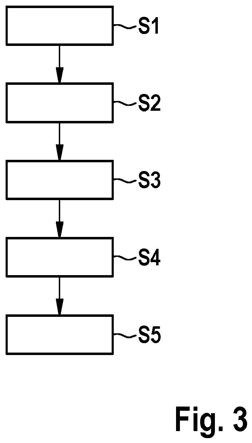

Anhand von Figur 3 soll mittels des Flussdiagramms ein vorteilhaftes Verfahren zum Herstellen des Reibbremskörpers 1 erläutert werden. In einem ersten Schritt S1 wird der insbesondere aus Grauguss gefertigte Basiskörper 3 bereitgestellt. In einem darauffolgenden Schritt S2 wird zumindest eine stirnseitige Oberfläche des Basiskörpers 3 zur Einstellung einer definierten Rauigkeit mechanisch vorbehandelt, beispielsweise mittels Schleifen.

In dem darauffolgenden optionalen Schritt S3 wird die Zwischenschicht 8 aus reinem ferritisch-austenitischen Stahl auf den Basiskörper 3 aufgebracht. Dabei wird die Zwischenschicht 8 bevorzugt durch Laserauftragsschweißen oder mittels thermischer Spritzverfahren auf den Basiskörper 3 aufgebracht.

Anschließend wird in einem Schritt S4 die eigentliche Verschleißschutzschicht 5 auf den Basiskörper 3 oder auf die Zwischenschicht 8 aufgebracht, wobei die Hartstoffpartikel 7 gleichzeitig mit der Matrixphase aus ferritisch-austenitischem Stahl auf den Basiskörper 3 oder auf die Zwischenschicht 8 aufgebracht werden.

Abschließend wird in einem Schritt S5 der fertige Reibbremskörper 1 erhalten, wobei optional die Oberfläche der Verschleißschutzschicht 5 mechanisch nachbearbeitet wird, insbesondere geschliffen wird, um eine gewünschte Geometrie und Rauigkeit für das Zusammenwirken mit dem zugeordneten Bremsbelag und/oder Bremsklotz der Reibbremse zu gewährleisten.

## Patentansprüche

1. Verfahren zum Herstellen eines Reibbremskörpers (1) für eine Reibbremse eines Kraftfahrzeugs, insbesondere Bremsscheibe (2), wobei ein insbesondere aus Grauguss gefertigter Basiskörper (3) mit zumindest einer eine Reibkontaktoberfläche (4) bildenden Verschleißschutzschicht (5) versehen wird, wobei die Verschleißschutzschicht (5) aus ferritisch-austenitischem Stahl (6) mit eingelagerten Hartstoffpartikeln (7) hergestellt wird, **dadurch gekennzeichnet, dass** die Hartstoffpartikel (7) gleichzeitig mit der Matrixphase aus ferritisch-austenitischem Stahl (6) aufgebracht werden, wobei vor dem Aufbringen der Verschleißschutzschicht (5) eine Zwischenschicht (8) aus reinem ferritisch-austenitischem Stahl (6) auf dem Basiskörper (3) aufgebracht wird.

2. Verfahren nach Anspruch 1, **dadurch gekennzeichnet, dass** die Verschleißschutzschicht (5) durch Laserauftragsschweißen oder thermisches Spritzen auf den Basiskörper (3) aufgebracht wird.

3. Verfahren nach einem der vorhergehenden Ansprüche, **dadurch gekennzeichnet, dass** die Verschleißschutzschicht (5) mit Chrom und/oder Stickstoff legiert wird.

4. Verfahren nach einem der vorhergehenden Ansprüche, **dadurch gekennzeichnet, dass** die Hartstoffpartikel (7) in der Verschleißschutzschicht (5) fein verteilt werden.

5. Verfahren nach einem der vorhergehenden Ansprüche, **dadurch gekennzeichnet, dass** Hartstoffpartikel (7) mit einer mittleren Partikelgröße von weniger als 50 µm verwendet werden.

6. Verfahren nach einem der vorhergehenden Ansprüche, **dadurch gekennzeichnet, dass** als Hartstoffpartikel (7) Karbide, Oxide, Nitride oder Boride verwendet werden.

7. Verfahren nach einem der vorhergehenden Ansprüche, **dadurch gekennzeichnet, dass** der Basiskörper (3) vor dem Aufbringen der Verschleißschutzschicht (5) und/oder der Zwischenschicht (8) mechanisch vorbearbeitet wird.

## Claims

1. Process for producing a friction brake element (1) for a friction brake of a motor vehicle, in particular a brake disk (2), wherein a main element (3) made, in particular, of gray cast iron is provided with at least one antiwear layer (5) forming a frictional contact surface (4), wherein the antiwear layer (5) is made of ferritic-austenitic steel (6) having embedded hard material particles (7), **characterized in that** the hard material particles (7) are applied simultaneously with the matrix phase of ferritic-austenitic steel (6), wherein an intermediate layer (8) composed of pure ferritic-austenitic steel (6) is applied to the main element (3) before application of the antiwear layer (5).

2. Process according to Claim 1, **characterized in that** the antiwear layer (5) is applied to the main element (3) by laser buildup welding or thermal spraying.

3. Process according to either of the preceding claims, **characterized in that** the antiwear layer (5) is alloyed with chromium and/or nitrogen.

4. Process according to any of the preceding claims, **characterized in that** the hard material particles (7) are finely distributed in the antiwear layer (5).

5. Process according to any of the preceding claims, **characterized in that** hard material particles (7) having an average particle size of less than 50 µm are used.

6. Process according to any of the preceding claims, **characterized in that** carbides, oxides, nitrides or borides are used as hard material particles (7).

7. Process according to any of the preceding claims, **characterized in that** the main element (3) is pretreated mechanically before application of the antiwear layer (5) and/or the intermediate layer (8).

## Revendications

1. Procédé pour la fabrication d'un corps (1) de frein à friction, destiné à un frein à friction d'un véhicule automobile, en particulier un disque de frein (2), un corps de base (3) fabriqué en particulier à partir de fonte grise étant pourvu d'au moins une couche de protection contre l'usure (5) formant une surface de contact de friction (4), la couche de protection contre l'usure (5) étant réalisée à partir d'acier ferritique-austénitique (6) présentant des particules dures (7) incorporées, **caractérisé en ce que**
les particules dures (7) sont appliquées simultanément avec la phase de matrice en acier ferritique-austénitique (6), une couche intermédiaire (8) en acier ferritique-austénitique pur (6) étant appliquée sur le corps de base (3) avant l'application de la couche de protection contre l'usure (5).

2. Procédé selon la revendication 1, **caractérisé en ce que**
la couche de protection contre l'usure (5) est appliquée par soudage par dépôt laser ou par pulvérisation thermique sur le corps de base (3).

3. Procédé selon l'une des revendications précédentes, **caractérisé en ce que** la couche de protection contre l'usure (5) est alliée avec du chrome et/ou de l'azote.

4. Procédé selon l'une des revendications précédentes, **caractérisé en ce que** les particules dures (7) sont réparties finement dans la couche de protection contre l'usure (5).

5. Procédé selon l'une des revendications précédentes, **caractérisé en ce que** des particules dures (7) présentant une grosseur moyenne de particule inférieure à 50 µm sont utilisées.

6. Procédé selon l'une des revendications précédentes, **caractérisé en ce que** des carbures, des oxydes, des nitrures ou des borures sont utilisés comme particules dures (7).

7. Procédé selon l'une des revendications précédentes, **caractérisé en ce que** le corps de base (3) est traité mécaniquement au préalable, avant l'application de la couche de protection contre l'usure (5) et/ou de la couche intermédiaire (8).
